# EUROPÄISCHE PATENTSCHRIFT

(11) **EP 4 127 515 B1**
(45) Veröffentlichungstag und Bekanntmachung des Hinweises auf die Patenterteilung: **10.01.2024**
(21) Anmeldenummer: 21707658.7
(22) Anmeldetag: 22.02.2021
(51) Int. Cl.: F16H 49/00, B62M 6/55

(54) **ANTRIEBSEINHEIT**
DRIVE UNIT
UNITÉ D'ENTRAÎNEMENT

(30) Priorität: 23.03.2020 DE 102020203712
(43) Veröffentlichungstag der Anmeldung: 08.02.2023
(73) Patentinhaber: ZF Friedrichshafen AG, 88046 Friedrichshafen (DE)
(72) Erfinder: KRAFT, Steffen, 89134 Blaustein (DE); PERCIC, Miran, 73540 Heubach (DE); NIERESCHER, Rüdiger, 73529 Schwäbisch Gmünd (DE); KRAFT, Klaus, 89134 Blaustein (DE)
(86) Internationale Anmeldenummer: PCT/EP2021/054259
(87) Internationale Veröffentlichungsnummer: WO 2021/190843

(56) Entgegenhaltungen:
- CN-A- 102 069 889
- DE-A1-102015 223 903
- US-A1- 2020 003 289

## Beschreibung

Die Erfindung betrifft eine Antriebseinheit für ein muskelkraftbetriebenes Fahrzeug mit den Merkmalen des Oberbegriffs von Anspruch 1.

CN 102 069 889 A offenbart die Merkmale des Oberbegriffes des Anspruchs 1.

DE 10 2015 100 676 A1 offenbart eine Antriebsbaugruppe mit einem manuellen Antrieb, einem elektrischen Hilfsantrieb, und einem gemeinsamen Abtriebselement. Die Antriebseinheit weist einen komplexen Aufbau mit einer Vielzahl an einzelnen Komponenten und Lagerstellen auf.

EP 2 724 926 A1 offenbart eine zentrale Antriebseinheit mit einer Tretlagerwelle für einen manuellen Antrieb und einen Hilfsantrieb mit einem nachgeschalteten Planetengetriebe. Auch diese Antriebseinheit weist einen vergleichsweise komplexen Aufbau mit einer Vielzahl einzelner Komponenten auf.

DE 10 2014 108 611 A1 offenbart eine Fahrradantriebsvorrichtung mit einem Antriebsgehäuse zur Aufnahme einer Tretkurbelwelle, einem Spannungswellengetriebe, das innerhalb des Antriebsgehäuses angeordnet und mit einem Zugmittelträger triebtechnisch in Verbindung bringbar ist. Diese Fahrradantriebsvorrichtung verfügt ebenfalls über einen komplexen Aufbau.

Der Erfindung liegt die Aufgabe zugrunde, eine demgegenüber verbesserte Antriebseinheit bereitzustellen. Insbesondere sind eine kompakte Bauweise, eine zuverlässige Funktion und eine hohe Laufruhe wünschenswert.

Die Erfindung löst diese Aufgabe durch eine Antriebseinheit mit den Merkmalen des Anspruchs 1. Die Antriebseinheit ist für ein muskelkraftbetriebenes Fahrzeug eingerichtet, insbesondere für ein Fahrrad oder ein EPAC (Electrically Power Assisted Cycle). Die Antriebseinheit weist ein Gehäuse, einen Elektromotor mit einem Rotor, eine Tretkurbelwelle, ein mit dem Rotor gekoppeltes Wellgetriebe und eine Abtriebswelle auf. Das Wellgetriebe weist eine Außenbuchse mit einer Innenverzahnung auf, wobei die Außenbuchse des Wellgetriebes über einen Puffer, beispielsweise ein Gummi-Metall-Lager, mit dem Gehäuse gekoppelt ist. Auf diese Weise kann insbesondere eine vorteilhafte akustische Entkopplung von Außenbuchse und Gehäuse erfolgen. Unabhängig davon kann ein Ausgleich von beispielsweise durch Achsversatz und/oder Verkippung hervorgerufenen Exzentrizitäten erreicht werden.

Die Antriebseinheit weist für einen elektrischen Antrieb einen elektrischen Antriebszweig auf, wobei vorgesehen ist, dass der Rotor des Elektromotors über das Wellgetriebe und eine erste Freilaufkupplung mit der Abtriebswelle gekoppelt ist. Das Drehmoment des Elektromotors wird über das Wellgetriebe und die erste Freilaufkupplung auf die Abtriebswelle übertragen.

Die Antriebseinheit weist für einen muskelkraftbetriebenen Antrieb einen mechanischen beziehungsweise muskelkraftbetriebenen Antriebszweig auf, wobei vorgesehen ist, dass die Tretkurbelwelle mittels einer weiteren zweiten Freilaufkupplung mit der Abtriebswelle gekoppelt ist. Das auf die Tretkurbelwelle aufgebrachte Drehmoment wird über die zweite Freilaufkupplung auf die Abtriebswelle übertragen.

In zweckmäßiger Weise kann das Wellgetriebe einen Wellgenerator und eine verformbare, beispielsweise zylindrische Innenbuchse mit einer Außenverzahnung (Flexspline) aufweisen. Wie oben erläutert, weist das Wellgetriebe zudem eine, beispielsweise zylindrische und vorzugsweise starre, Außenbuchse mit einer Innenverzahnung auf. Hiermit ist eine kompakte Getriebeeinheit mit vergleichsweise hohen Übersetzungsverhältnissen geschaffen. Dies trägt zu einer strikt koaxialen Anordnung des Wellgetriebes und der Antriebseinheit insgesamt bei.

In vorteilhafter Weise kann die Außenbuchse des Wellgetriebes drehfest mit dem Gehäuse gekoppelt sein. Somit kann die Außenbuchse als Drehmomentabstützung relativ zum Gehäuse dienen. Durch die drehfeste Außenbuchse kommt es zu keiner Überlagerung mit der Drehbewegung des Flexsplines.

In zweckmäßiger Weise können die Tretkurbelwelle und das Wellgetriebe jeweils mittels einer Freilaufkupplung mit der Abtriebswelle gekoppelt sein, wobei das Wellgetriebe, die Freilaufkupplungen und die Abtriebswelle koaxial zueinander im Gehäuse angeordnet sein können. Durch die Ausgestaltung mit einem Wellgetriebe als einstufige Getriebeeinheit, ist eine koaxiale und besonders kompakte Getriebeeinheit ermöglicht, die wiederum eine kompakte und platzsparende Ausgestaltung der Antriebsbaugruppe begünstigt. Durch Kopplung mit der Abtriebswelle sind ein manueller Antrieb und ein elektrisch unterstützter Antrieb ermöglicht. Eine Momentenaddition, das heißt eine Addition der Drehmomente von Tretkurbelwelle und Elektromotor, erfolgt an der Abtriebswelle. Die Abtriebswelle kann als Hohlwelle ausgebildet sein.

In vorteilhafter Weise kann die Außenbuchse des Wellgetriebes und der Puffer, ggf. mit Innenring, Elastomerkörper und/oder Außenring, als vormontierbare Einheit ausgebildet sein, so dass die vormontierte Einheit, als Ganzes in das Gehäuse der Antriebseinheit montiert werden kann. Dadurch wird die Montage begünstigt, da Komponenten nicht einzeln im Gehäuse montiert werden müssen, sondern als vormontierte Einheit, das heißt als Baugruppe, eingebracht werden können. Dadurch kann der Zeitbedarf für eine Endmontage ggf. verkürzt werden.

In zweckmäßiger Weise kann der Puffer einen metallischen Innenring und einen metallischen Außenring aufweisen, wobei radial zwischen Innenring und Außenring ein Elastomerkörper, beispielsweise ein ringförmiger Elastomerkörper, angeordnet sein kann. Neben einer akustischen Entkopplung kann damit auch eine Dämpfung von durch den Motor eingeleiteten Drehmomentspitzen erfolgen. Der Puffer kann somit als Torsionsfeder wirken. Der Außenring kann mit seiner äußeren Umfangsfläche an einer inneren Umfangsfläche des Gehäuses anliegen. Die Außenbuchse des Wellgetriebes kann mit ihrer äußeren Umfangsfläche an einer inneren Umfangsfläche des Innenrings des Puffers anliegen. Ebenfalls denkbar ist, dass der Elastomerkörper eine nicht ringförmige Geometrie aufweist. Beispielsweise kann zwischen Innenring und Außenring eine Verzahnungsgeometrie mit einem definierten Zwischenraum ausgebildet sein, welcher durch den Puffer elastisch verbunden wird. Der Puffer kann dann optional so ausgebildet sein, dass er akustisch dämpft und einen Toleranzausgleich in Maß und Einbaulage gewährleistet.

In vorteilhafter Weise kann die Außenbuchse des Wellgetriebes mittels eines Passsitzes mit dem Innenring des Puffers gekoppelt sein. Dies erlaubt eine konstruktiv einfache und präzise Befestigung der Außenbuchse am Innenring. Eine Montage der Komponenten aneinander, beispielsweise auch einer vormontierbaren Einheit ist hiermit begünstigt.

In zweckmäßiger Weise kann der Außenring des Puffers aus dem gleichen Material wie das Gehäuse der Antriebseinheit oder aus einem Material mit einem gleichen Ausdehnungskoeffizienten wie das Gehäuse der Antriebseinheit ausgebildet sein. Auf diese Weise kann ein Materialausdehnungsausgleich erfolgen. Der Außenring ist auch beim Auftreten von thermischen Einflüssen noch sicher mit dem Gehäuse gekoppelt.

In vorteilhafter Weise kann der Innenring des Puffers aus dem gleichen Material wie die Außenbuchse des Wellgetriebes oder aus einem Material mit einem gleichen Ausdehnungskoeffizienten wie die Außenbuchse des Wellgetriebes ausgebildet sein. Auf diese Weise kann ein Materialausdehnungsausgleich erfolgen. Der Innenring und die Außenbuchse sind auch beim Auftreten von thermischen Einflüssen noch sicher miteinander gekoppelt.

In zweckmäßiger Weise kann der Innenring des Puffers aus Stahl ausgebildet sein und/oder der Außenring des Puffers kann aus Aluminium ausgebildet sein. Dadurch ist eine stabile Bauweise bei vergleichsweise geringem Gewicht möglich. Es ergibt sich ein besonders vorteilhafter Materialausdehnungsausgleich. Das Gehäuse der Antriebseinheit kann aus Aluminium ausgebildet sein. Die Außenbuchse des Wellgetriebes kann aus Stahl ausgebildet sein.

In vorteilhafter Weise weist der Elastomerkörper eine erste Stirnseite und eine gegenüberliegende zweite Stirnseite, wobei zumindest an einer der Stirnseiten, insbesondere an beiden Stirnseiten, eine vorzugsweise ringförmige umlaufende Aussparung ausgebildet ist. Dadurch kann der sich durch den Puffer ergebende Dämpfungseffekt beeinflusst werden. Es kann eine Auslegung des Lagers hinsichtlich eines Optimums an axialer, radialer und/oder rotatorischer Steifigkeit erfolgen. Die stirnseitig ausgebildeten Aussparungen können beispielsweise einen dreieckförmigen Querschnitt aufweisen.

Die Erfindung wird im Folgenden anhand der Figuren näher erläutert, wobei gleiche oder funktional gleiche Elemente mit identischen Bezugszeichen versehen sind. Es zeigen:
- Fig. 1: eine Ausführungsform einer Antriebseinheit in einer Schnittansicht; und
- Fig.2: das Gehäuse, den Puffer, die Außenbuchse und den Flexspline des Wellgetriebes der Antriebseinheit aus Fig.1 in einer schematischen Darstellung.

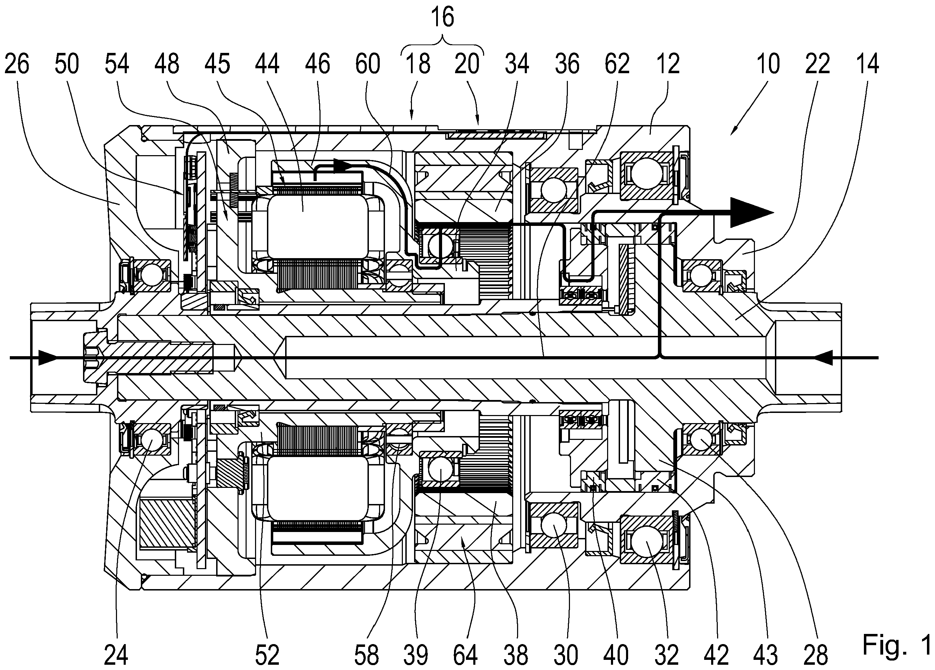

Figur 1 zeigt eine Antriebseinheit für ein muskelkraftbetriebenes Fahrzeug, insbesondere ein Fahrrad oder ein EPAC, wobei die Antriebseinheit insgesamt mit dem Bezugszeichen 10 versehen ist.

Die Antriebseinheit 10 weist ein Gehäuse 12 auf, an oder in dem die Komponenten der Antriebseinheit 10 angeordnet sind. Die Antriebseinheit 10 weist für einen muskelkraftbetriebenen Antrieb eine Tretkurbelwelle 14 auf, die im Gehäuse 12 drehbar gelagert ist. Zudem weist die Antriebseinheit 10 einen elektrischen Hilfsantrieb 16 auf, der einen Elektromotor 18 und ein Wellgetriebe 20 aufweist, wobei der Elektromotor 18 mit dem Wellgetriebe 20 mechanisch gekoppelt ist. Die Tretkurbelwelle 14 und der Hilfsantrieb 16 sind mit einer Abtriebswelle 22 gekoppelt, an der ein Kettenblattträger oder ein Kettenblatt befestigbar ist (nicht dargestellt).

Die Tretkurbelwelle 14 ist mittels eines ersten Wälzlagers 24 an einem Gehäusedeckel 26 gelagert, der das Gehäuse 12 der Antriebseinheit 10 zu einer Seite hin (in Fig.1 nach links) verschließt. Zudem ist die Tretlagerwelle 14 mittels eines zweiten Wälzlagers 28 an der als Hohlwelle ausgebildeten Abtriebswelle 22 drehbar gelagert. Die Abtriebswelle 22 ist mittels eines dritten Wälzlagers 30 und eines vierten Wälzlagers 32 relativ zum Gehäuse 12 drehbar gelagert.

Das Wellgetriebe 20 weist einen Wellgenerator 34, eine verformbare Innenbuchse 36 mit Außenverzahnung (Flexspline) und eine Außenbuchse 38 mit Innenverzahnung auf. Das Wellgetriebe 20 ist eingangsseitig mit dem Elektromotor 18 und ausgangsseitig mit der Abtriebswelle 22 gekoppelt, und zwar mittels einer ersten Freilaufkupplung 40.

Die Tretkurbelwelle 14 ist mittels einer zweiten Freilaufkupplung 42 mit der Abtriebswelle 22 gekoppelt. An dieser Stelle kann die Tretkurbelwelle 14 einen radial nach außen abragenden Wellenabsatz 43 aufweisen, der mit der zweiten Freilaufkupplung 42 in Kontakt ist. Das Wellgetriebe 20, die Freilaufkupplungen 40, 42 und die Abtriebswelle 22 sind koaxial zueinander im Gehäuse 12 angeordnet.

Der Elektromotor 18 weist einen Stator 44 mit Statorspulen 45 und einen Rotor 46 auf. Der Rotor 46 ist mit dem Wellgetriebe 20, insbesondere mit dessen Innenbuchse (Flexspline) 36, gekoppelt. Das Wälzlager 39 der Innenbuchse (Flexsplines) 36 (Flexlager) ist an einem beispielsweise hülsenförmigen Verbindungsabschnitt des Rotors 46 gelagert.

Die Antriebseinheit 10 weist weiter einen Statorträger 48 und eine Elektronikeinheit auf, die als Elektronikplatine 50 ausgebildet sein kann. Der Statorträger 48 weist einen, beispielsweise hülsenförmigen, Trageabschnitt 52 und einen, beispielsweise scheibenförmigen, Befestigungsabschnitt 54 auf.

An dem Trageabschnitt 52 ist der Stator 44 befestigt und der Rotor 46 ist mittels eines Wälzlagers 58 drehbar am Trageabschnitt 52 gelagert. Über den Befestigungsabschnitt 54 kann der Statorträger 48 mit dem Gehäuse 12 der Antriebseinheit 10 verbunden werden.

Die Antriebseinheit 10 weist für einen elektrischen Antrieb einen elektrischen Antriebszweig 60 auf, wobei der Rotor 46 des Elektromotors 18 über das Wellgetriebe 20 und die erste Freilaufkupplung 40 mit der Abtriebswelle 22 gekoppelt ist. Das Drehmoment des Elektromotors 18 wird über das Wellgetriebe 20 und die erste Freilaufkupplung 40 auf die Abtriebswelle 22 übertragen.

Die Antriebseinheit 10 weist einen mechanischen beziehungsweise manuellen Antriebszweig 62 auf, wobei die Tretkurbelwelle 14 mittels der zweiten Freilaufkupplung 42 mit der Abtriebswelle 22 gekoppelt ist. Das auf die Tretkurbelwelle 14 aufgebrachte Drehmoment wird über die zweite Freilaufkupplung 42 auf die Abtriebswelle 22 übertragen.

Die Außenbuchse 38 des Wellgetriebes 20 ist drehfest mit dem Gehäuse 12 gekoppelt. Somit kann die Außenbuchse 38 als Drehmomentabstützung relativ zum Gehäuse 12 dienen. Die Außenbuchse 38 des Wellgetriebes 20 ist über einen, vorzugsweise mehrteilig ausgebildeten, Puffer 64, beispielsweise ein Gummi-Metall-Lager, mit dem Gehäuse 12 gekoppelt.

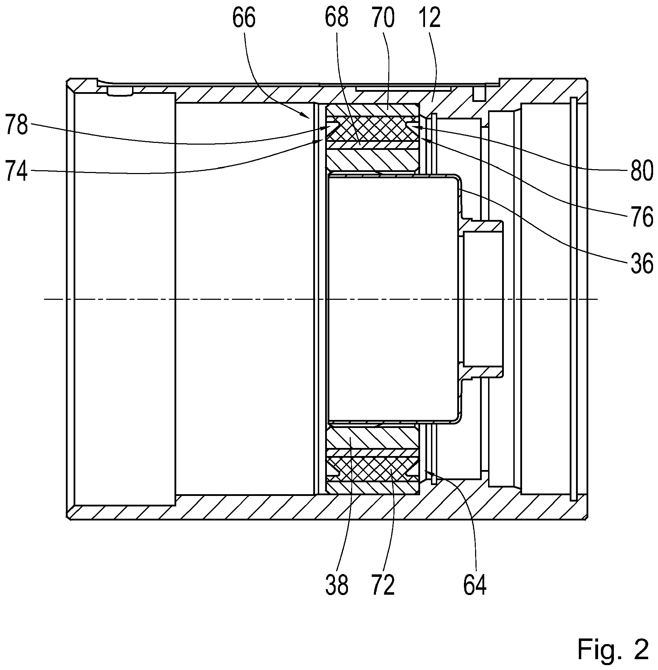

Die Außenbuchse 38 des Wellgetriebes 20 und der Puffer 64 sind als vormontierbare Einheit 66 ausgebildet (Fig.2), so dass die vormontierbare Einheit 66 im vormontierten Zustand als Ganzes in das Gehäuse 12 der Antriebseinheit 10 montiert werden kann.

Der Puffer 64 weist einen metallischen Innenring 68 und einen metallischen Außenring 70 auf, wobei radial zwischen Innenring 68 und Außenring 70 ein beispielsweise ringförmiger Elastomerkörper 72 angeordnet ist. Der Außenring 70 liegt mit seiner äußeren Umfangsfläche an einer innen Umfangsfläche des Gehäuses 12 an. Die Außenbuchse 38 des Wellgetriebes 20 liegt mit ihrer äußeren Umfangsfläche an einer inneren Umfangsfläche des Innenrings 68 an.

Die Außenbuchse 38 des Wellgetriebes 20 ist mittels eines Passsitzes mit dem Innenring 68 des Puffers 64 gekoppelt.

Der Außenring 70 ist aus dem gleichen Material wie das Gehäuse 12 der Antriebseinheit 10 oder aus einem Material mit einem gleichen Ausdehnungskoeffizienten wie das Gehäuse 12 der Antriebseinheit 10 ausgebildet. Der Außenring 70 und/oder das Gehäuse 12 können aus Aluminium ausgebildet sein.

Der Innenring 68 ist aus dem gleichen Material wie die Außenbuchse 38 des Wellgetriebes 20 oder aus einem Material mit einem gleichen Ausdehnungskoeffizienten wie die Außenbuchse 38 des Wellgetriebes 20 ausgebildet. Der Innenring 68 und/oder die Außenbuchse 38 können aus Stahl ausgebildet sein.

Der Elastomerkörper 72 weist eine erste Stirnseite 74 und eine gegenüberliegende zweite Stirnseite 76 auf. An den Stirnseiten 74, 76 ist jeweils eine umlaufende Aussparung 78, 80 ausgebildet. Die Aussparungen 78, 80 können beispielsweise einen dreieckförmigen Querschnitt aufweisen.

### Bezugszeichen

- 10: Antriebseinheit
- 12: Gehäuse
- 14: Tretkurbelwelle
- 16: Hilfsantrieb, elektrisch
- 18: Elektromotor
- 20: Wellgetriebe
- 22: Abtriebswelle
- 24: erstes Wälzlager
- 26: Gehäusedeckel
- 28: zweites Wälzlager
- 30: drittes Wälzlager
- 32: viertes Wälzlager
- 34: Wellgenerator
- 36: Innenbuchse
- 38: Außenbuchse
- 39: Wälzlager (Flexlager)
- 40: erste Freilaufkupplung
- 42: zweite Freilaufkupplung
- 43: Wellenabsatz
- 44: Stator
- 46: Rotor
- 48: Statorträger
- 50: Elektronikplatine, - einheit
- 52: Trageabschnitt
- 54: Befestigungsabschnitt
- 58: Wälzlager
- 60: elektrischer Antriebszweig
- 62: manueller Antriebszweig
- 64: Puffer
- 66: vormontierbare Einheit
- 68: Innenring
- 70: Außenring
- 72: Elastomerkörper
- 74: erste Stirnseite
- 76: zweite Stirnseite
- 78: Aussparung
- 80: Aussparung

## Patentansprüche

1. Antriebseinheit (10) für ein muskelkraftbetriebenes Fahrzeug, insbesondere ein Fahrrad oder ein Electrically Power Assisted Cycle, mit einem Gehäuse (12), einem Elektromotor (18) mit einem Rotor (44), einer Tretkurbelwelle (14), einem mit dem Rotor (44) gekoppelten Wellgetriebe (20) und einer Abtriebswelle (22), wobei das Wellgetriebe (20) eine Außenbuchse (38) mit einer Innenverzahnung aufweist, **dadurch gekennzeichnet, dass** die Außenbuchse (38) des Wellgetriebes (20) über einen Puffer (64) mit dem Gehäuse (12) gekoppelt ist.

2. Antriebseinheit (10) nach Anspruch 1, **dadurch gekennzeichnet, dass** das Wellgetriebe (20) einen Wellgenerator (34) und eine verformbare Innenbuchse (36) mit einer Außenverzahnung aufweist.

3. Antriebseinheit (10) nach Anspruch 1 oder 2, **dadurch gekennzeichnet, dass** die Außenbuchse (38) des Wellgetriebes (20) drehfest mit dem Gehäuse (12) gekoppelt ist.

4. Antriebseinheit (10) nach einem der voranstehenden Ansprüche, **dadurch gekennzeichnet, dass** die Tretkurbelwelle (14) und das Wellgetriebe (20) jeweils mittels einer Freilaufkupplung (40, 42) mit der Abtriebswelle (22) gekoppelt sind, wobei das Wellgetriebe (20), die Freilaufkupplungen (40, 42) und die Abtriebswelle (22) koaxial zueinander im Gehäuse (12) angeordnet sind.

5. Antriebseinheit (10) nach einem der voranstehenden Ansprüche, **dadurch gekennzeichnet, dass** die Außenbuchse (38) des Wellgetriebes (20) und der Puffer (64) als vormontierbare Einheit (66) ausgebildet sind, so dass die vormontierte Einheit (66) in das Gehäuse (12) der Antriebseinheit (10) montiert werden kann.

6. Antriebseinheit (10) nach einem der voranstehenden Ansprüche, **dadurch gekennzeichnet, dass** der Puffer (64) einen metallischen Innenring (68) und einen metallischen Außenring (70) aufweist, wobei radial zwischen Innenring (68) und Außenring (70) ein Elastomerkörper (72) angeordnet ist.

7. Antriebseinheit (10) nach Anspruch 6, **dadurch gekennzeichnet, dass** die Außenbuchse (38) des Wellgetriebes (20) mittels eines Passsitzes mit dem Innenring (68) des Puffers (64) gekoppelt ist.

8. Antriebseinheit (10) nach Anspruch 6 oder 7, **dadurch gekennzeichnet, dass** der Außenring (70) des Puffers (64) aus dem gleichen Material wie das Gehäuse (12) der Antriebseinheit (10) oder aus einem Material mit einem gleichen Ausdehnungskoeffizienten wie das Gehäuse (12) der Antriebseinheit (10) ausgebildet ist.

9. Antriebseinheit (10) nach einem der Ansprüche 6 bis 8, **dadurch gekennzeichnet, dass** der Innenring (68) des Puffers (64) aus dem gleichen Material wie die Außenbuchse (38) des Wellgetriebes (20) oder aus einem Material mit einem gleichen Ausdehnungskoeffizienten wie die Außenbuchse (38) des Wellgetriebes (20) ausgebildet ist.

10. Antriebseinheit (10) nach einem der Ansprüche 6 bis 9, **dadurch gekennzeichnet, dass** der Innenring (68) aus Stahl ausgebildet ist und/oder dass der Außenring (70) aus Aluminium ausgebildet ist.

11. Antriebseinheit (10) nach einem der Ansprüche 6 bis 10, **dadurch gekennzeichnet, dass** der Elastomerkörper (72) eine erste Stirnseite (74) und eine gegenüberliegende zweite Stirnseite (76) aufweist, wobei zumindest an einer der Stirnseiten (74, 76) eine vorzugsweise umlaufende Aussparung (78, 80) ausgebildet ist.

## Claims

1. Drive unit (10) for a human-powered vehicle, in particular a bicycle or an electrically power assisted cycle, with a housing (12), an electric motor (18) with a rotor (44), a pedal crank shaft (14), a harmonic drive (20) which is coupled to the rotor (44), and an output shaft (22), the harmonic drive (20) having an outer bushing (38) with an internal toothing system, **characterized in that** the outer bushing (38) of the harmonic drive (20) is coupled to the housing (12) via a buffer (64).

2. Drive unit (10) according to Claim 1, **characterized in that** the harmonic drive (20) has a wave generator (34) and a deformable inner bushing (36) with an external toothing system.

3. Drive unit (10) according to Claim 1 or 2, **characterized in that** the outer bushing (38) of the harmonic drive (20) is coupled to the housing (12) fixedly for conjoint rotation.

4. Drive unit (10) according to one of the preceding claims, **characterized in that** the pedal crank shaft (14) and the harmonic drive (20) are each coupled to the output shaft (22) by means of a freewheel clutch (40, 42), the harmonic drive (20), the freewheel clutches (40, 42) and the output shaft (22) being arranged coaxially with respect to one another in the housing (12).

5. Drive unit (10) according to one of the preceding claims, **characterized in that** the outer bushing (38) of the harmonic drive (20) and the buffer (64) are configured as a unit (66) which can be pre-assembled, with the result that the pre-assembled unit (66) can be mounted into the housing (12) of the drive unit (10).

6. Drive unit (10) according to one of the preceding claims, **characterized in that** the buffer (64) has a metallic inner ring (68) and a metallic outer ring (70), an elastomer element (72) being arranged radially between the inner ring (68) and the outer ring (70).

7. Drive unit (10) according to Claim 6, **characterized in that** the outer bushing (38) of the harmonic drive (20) is coupled to the inner ring (68) of the buffer (64) by means of a snug fit.

8. Drive unit (10) according to Claim 6 or 7, **characterized in that** the outer ring (70) of the buffer (64) is configured from the same material as the housing (12) of the drive unit (10) from a material with an identical coefficient of expansion to the housing (12) of the drive unit (10).

9. Drive unit (10) according to one of Claims 6 to 8, **characterized in that** the inner ring (68) of the buffer (64) is configured from the same material as the outer bushing (38) of the harmonic drive (20) from a material with an identical coefficient of expansion to the outer bushing (38) of the harmonic drive (20).

10. Drive unit (10) according to one of Claims 6 to 9, **characterized in that** the inner ring (68) is configured from steel, and/or **in that** the outer ring (70) is configured from aluminium.

11. Drive unit (10) according to one of Claims 6 to 10, **characterized in that** the elastomer element (72) has a first end side (74) and an opposite second side (76), a preferably peripheral cut-out (78, 80) being configured at least on one of the end sides (74, 76).

## Revendications

1. Unité d'entraînement (10) pour un véhicule à propulsion musculaire, notamment une bicyclette ou un vélo à assistance électrique, avec un carter (12), un moteur électrique (18) avec un rotor (44), un arbre de pédalier (14), un engrenage à onde de déformation (20) couplé au rotor (44) et un arbre de sortie (22), l'engrenage à onde de déformation (20) présentant une douille extérieure (38) avec une denture intérieure, **caractérisée en ce que** la douille extérieure (38) de l'engrenage à onde de déformation (20) est couplée au carter (12) par l'intermédiaire d'un tampon (64).

2. Unité d'entraînement (10) selon la revendication 1, **caractérisée en ce que** l'engrenage à onde de déformation (20) présente un générateur d'onde (34) et une douille intérieure déformable (36) avec une denture extérieure.

3. Unité d'entraînement (10) selon la revendication 1 ou 2, **caractérisée en ce que** la douille extérieure (38) de l'engrenage à onde de déformation (20) est couplée de manière solidaire en rotation au carter (12).

4. Unité d'entraînement (10) selon l'une quelconque des revendications précédentes, **caractérisée en ce que** l'arbre de pédalier (14) et l'engrenage à onde de déformation (20) sont couplés chacun à l'arbre de sortie (22) au moyen d'un embrayage à roue libre (40, 42), l'engrenage à onde de déformation (20), les embrayages à roue libre (40, 42) et l'arbre de sortie (22) étant agencés coaxialement les uns par rapport aux autres dans le carter (12).

5. Unité d'entraînement (10) selon l'une quelconque des revendications précédentes, **caractérisée en ce que** la douille extérieure (38) de l'engrenage à onde de déformation (20) et le tampon (64) sont réalisés sous forme d'unité prémontée (66), de telle sorte que l'unité prémontée (66) peut être montée dans le carter (12) de l'unité d'entraînement (10).

6. Unité d'entraînement (10) selon l'une quelconque des revendications précédentes, **caractérisée en ce que** le tampon (64) présente une bague intérieure métallique (68) et une bague extérieure métallique (70), un corps en élastomère (72) étant agencé radialement entre la bague intérieure (68) et la bague extérieure (70).

7. Unité d'entraînement (10) selon la revendication 6, **caractérisée en ce que** la douille extérieure (38) de l'engrenage à onde de déformation (20) est couplée à la bague intérieure (68) du tampon (64) au moyen d'un ajustement serré.

8. Unité d'entraînement (10) selon la revendication 6 ou 7, **caractérisée en ce que** la bague extérieure (70) du tampon (64) est réalisée dans le même matériau que le carter (12) de l'unité d'entraînement (10) ou dans un matériau ayant un coefficient de dilatation identique à celui du carter (12) de l'unité d'entraînement (10).

9. Unité d'entraînement (10) selon l'une quelconque des revendications 6 à 8, **caractérisée en ce que** la bague intérieure (68) du tampon (64) est réalisée dans le même matériau que la douille extérieure (38) de l'engrenage à onde de déformation (20) ou dans un matériau ayant un coefficient de dilatation identique à celui de la douille extérieure (38) de l'engrenage à onde de déformation (20) .

10. Unité d'entraînement (10) selon l'une quelconque des revendications 6 à 9, **caractérisée en ce que** la bague intérieure (68) est réalisée en acier et/ou **en ce que** la bague extérieure (70) est réalisée en aluminium.

11. Unité d'entraînement (10) selon l'une quelconque des revendications 6 à 10, **caractérisée en ce que** le corps en élastomère (72) présente un premier côté frontal (74) et un deuxième côté frontal opposé (76), un évidement (78, 80) de préférence périphérique étant réalisé sur au moins l'un des côtés frontaux (74, 76).
